# EUROPEAN PATENT APPLICATION

(11) **EP 4 649 826 A1**
(43) Date of publication of application: **19.11.2025**
(21) Application number: 24741756.1
(22) Date of filing: 12.01.2024
(51) Int. Cl.: A01N 59/16, A01N 65/36, A01P 17/00

(54) **BIRD DAMAGE-PREVENTING COMPOSITION**

(30) Priority: 12.01.2023 KR 20230004645
(71) Applicant: Hanbio Co., Ltd, Gyeongsangnam-do 50253 (KR)
(72) Inventor: HAN, In Yul, Gimhae-si Gyeongsangnam-do 50858 (KR); PARK, Seong Oung, Jinju-si Gyeongsangnam-do 52641 (KR)
(74) Representative: Valet Patent Services Limited
(86) International application number: PCT/KR2024/000641
(87) International publication number: WO 2024/151135

(57) **Abstract**

The present invention relates to a bird damage-preventing composition comprising an ultraviolet ray blocking agent comprising zinc oxide, titanium dioxide, and a Thanaka tree extract. The bird damage-preventing composition can interrupt the field of view of birds which recognize seeds and fruits, thereby reducing bird damage occurring at a crop cultivation site.

## Description

### TECHNICAL FIELD

The present invention relates to a bird damage-preventing composition, and more particularly, to a bird damage-preventing composition that can interrupt the field of view of birds, thereby reducing bird damage occurring at a crop cultivation site.

### BACKGROUND

A bird's eye contain a cone that can detect ultraviolet wavelengths in addition to the visible light range, and thus unlike humans, birds can detect and distinguish plants in the ultraviolet range. In an attempt to utilize the characteristics of such birds to prevent collision damage that wild birds collide with glass windows, i.e., prevent bird collisions, bird-friendly buildings constructed using various methods, such as applying patterns to glass windows or attaching ultraviolet reflective tape thereto have been developed. In addition, glass windows that birds can easily recognize in the UV range have been developed, and utilized in buildings.

On the other hand, it is difficult to find examples of utilizing the characteristics of birds to reduce damage to crops caused by birds. As technologies to reduce damage caused by birds, in the case of fruits (apples, pears, grapes, etc.), paper bags are covered over the fruit, or cresol soap liquid (smell) is used. In addition, for lost crops, legumes, miscellaneous grains, and rice crops, various bird repellents such as bird nets, scarecrows, or moving objects (such as kites or drones) are used, or sirens (sounds, loud noises) and light-reflecting tapes, and bird repellents using pesticide ingredients or the like are applied in various different ways, but the effects resulting therefrom are minimal. For example, Korean Patent Registration No. 10-0367080 proposes a technology designed to emit a bird repelling scene from a fruit protection bag to prevent bird damage, Korean Patent Registration No. 10-0436895 proposes a textile fabric that emits a bird repellent scent, and Korean Unexamined Utility Model Publication No. 20-1998-0059565 proposes a device that makes an eagle-shaped imitation move to repels birds.

These conventional technologies repel birds through smell or visual effects, but they do not have sufficient effects capable of reducing damage to crops caused by birds, and it has been recently investigated that 30% of the overall croup yields is damaged by birds. Therefore, there is a need to develop improved technologies that can prevent bird damage.

### DETAILED DESCRIPTION OF THE INVENTION

### Technical Problem

The present invention has been devised in view of the above-mentioned conventional techniques, and an object of the present invention is to provide a bird damage-preventing composition that can interrupt the field of view of birds, thereby reducing bird damage occurring at a crop cultivation site.

### Technical Solution

In order to achieve the above object, according to an aspect of the present invention, provided is a bird damage-preventing composition comprising an ultraviolet ray blocking agent comprising zinc oxide, titanium dioxide, and a Thanaka tree extract.

In an embodiment, the ultraviolet ray blocking agent may further comprise oxybenzone (benzophenone-3; BP-3) and avobenzone.

In an embodiment, the bird damage-preventing composition may comprise a water-dispersible resin, a filler and a thickener.

In an embodiment, the bird damage-preventing composition may comprise a stevia or a sugar.

In an embodiment, the bird damage-preventing composition may be diluted by mixing 2,000 to 5,000 parts by weight of water with respect to 100 parts by weight of the ultraviolet ray blocking agent.

### Advantageous Effects

When the bird damage-preventing composition according to the present invention is applied, it is possible to interrupt the field of view of birds which recognize seeds and fruits through blocking ultraviolet rays, thereby reducing bird damage occurring at a crop cultivation site.

### BRIEF DESCRIPTION OF THE DRAWINGS

FIG. 1 shows the results of observing a group treated with a bird damage-preventing composition to blueberry fruit trees and a control group.
FIG. 2 shows the results of observing a group treated with a bird damage-preventing composition to peach fruit trees and a control group.

### DETAILED DESCRIPTION OF THE EMBODIMENTS

Hereinafter, specific embodiments of the present invention will be described in detail. Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Birds can detect wavelengths in the ultraviolet range, so they can clearly distinguish trees that look to the human eye like exuberant leaves covered with green mess, and can recognize each leaf distinctly. That is, when detecting leaves in the ultraviolet range, plants can be seen much more clearly, with the upper side of the leaves appearing brighter and the lower side detected as much darker. When viewing the leaves in the ultraviolet range, it is possible to see that the contrast is higher, and the leaves are detected in much more detail than before.

All fruits and seeds of crops excrete sugars in the form of white powder on their outer skin. At this time, birds cannot see sugars directly with their eyes, but when exposed to ultraviolet rays from sunlight, a bright (sparkling) light appears to the bird's eyes according to the discharge level of sugars, allowing them to distinguish ripe fruits and seeds of crops.

In the ultraviolet region, the amount of light reflected is far greater than the amount of light transmitted. For example, birds of prey such as common Kestrel use ultraviolet light to hunt, however, it is known that the common Kestrel does not watch field mice while flying hovering over the sky, but rather confirms the ultraviolet light reflected from the sugar contained in the urine of field mice and performs hunting.

Under these circumstances, the present applicant has developed a bird damage-preventing composition in the form of a black screen matter (bird eyes don't sight), which uses an ultraviolet blocking material instead of a conventional bird repellent to make it difficult to identify the fruits and seeds of crops within the field of view of bird, thereby reducing damage to crops.

Specifically, the present inventors have confirmed through experiments that birds detect and damage the ripened components of various seeds and fruits according to the intensity of ultraviolet rays that is reacted to the sugar. Based on such finding, the inventors have determined that the present invention can make crop fruits and seed chambers invisible from the field of view of birds, thereby effectively preventing bird damage.

Therefore, the bird damage-preventing composition of the present invention uses an ultraviolet ray blocking agent comprising zinc oxide, titanium dioxide, and a Thanaka tree extract to obtain the effect of interrupting the vision of birds.

In an embodiment, a bird damage-preventing composition comprising an ultraviolet ray blocking agent is provided.

Generally, quinine salts such as quinine hydrochloride, p-aminobenzoic acid derivatives such as ethyl p-aminobenzoate, and salicylic acid derivatives such as phenyl salicylate are used as UV-blocking ingredients. These absorbents are used in cosmetic compositions and are added in amounts of about 2 to 10% in the form of creams, lotions, and oils and applied to the skin. As the main ingredients thereof, powders such as zinc oxide and titanium dioxide are used to help prevent ultraviolet rays.

The ultraviolet ray blocking agent used in the present invention may be a combination of two or more ingredients selected from inorganic substances such as zinc oxide and titanium dioxide, organic substances such as oxybenzone (benzophenone-3; BP-3), avobenzone, and natural substances such as a Thanaka tree extract (containing 98% coumarin and marmesin).

Zinc oxide is an inorganic compound which is a white powder that is not soluble in water. Zinc oxide is used as an additive in numerous materials and products, including cosmetics, food supplements, rubber, plastics, ceramics, glass, cement, lubricants, paints, ointments, adhesives, sealants, pigments, foods, batteries, ferrites, and flame retardants. Mineral zinc ore occurs naturally, but most zinc oxide is synthetically produced.

Titanium dioxide is also used in a variety of applications, including as an ultraviolet ray blocking agent and cosmetics, white coating materials (pigments, glazes, inks, correction fluids, paints, etc.), photocatalysts, food additives, antimicrobials, deodorizers and sterilizers, semiconductor materials, and solar cell and coating materials.

In addition, oxybenzone is a pale yellow solid that is readily soluble in most organic solvents, and belongs to the aromatic ketone family known as benzophenones, which is not only a chemical found in a variety of naturally occurring flowering plants, but also an organic component of ultraviolet ray blocking agent. Oxybenzone is widely used in lotions, plastics, toys, and furniture finishes to limit UV degradation.

Furthermore, "Avobenzone (brand name: Parsol 1789, Milestab 1789, Eusolex 9020, Escalol 517, Neo Heliopan 357, and others, INCI butyl methoxydibenzoylmethane)" is a fat-soluble ingredient used in sunscreen products to absorb the full spectrum of UVA rays. Avobenzone is sensitive to the properties of the solvent, thus being relatively stable in polar protic solvents and unstable in non-polar environments. In addition, UVA light irradiation can generate a triplet excited state in the keto form, which can decompose avobenzone or transfer energy to biological targets, causing harmful effects.

Further, a Thanaka tree extract is an extract obtained from a perennial plant that contains 98% coumarin and marmesin, and in order to obtain high-quality ingredients, a tree that is at least 35 years old is used. In its natural state, Thanaka may be a small log or bundle, but it can be commercially sold in the form of a paste or powder. Thanaka tree powder has a unique feature of Myanmar culture, and thus is generally used for protecting the skin from ultraviolet rays, as well as for providing a refreshing feeling, preventing blemishes, and controlling skin oiliness. Thanaka tree grows wild in Myanmar's Shan State and Bogyoke areas, and the like.

In an embodiment, zinc oxide, titanium dioxide, and Thanaka tree extract are used as the ultraviolet ray blocking agent, which have been shown to be highly stable and thus particularly suitable for including in the bird damage-preventing composition.

In another embodiment, the ultraviolet ray blocking agent may further include oxybenzone and avobenzone.

Thereby, the ultraviolet ray blocking agent used in an embodiment may be an ultraviolet ray blocking agent comprising 1 to 50 parts by weight of zinc oxide, 1 to 50 parts by weight of titanium dioxide and 1 to 50 parts by weight of a Thanaka tree extract.

Further, the ultraviolet ray blocking agent used in another embodiment may be an ultraviolet ray blocking agent comprising 1 to 50 parts by weight of zinc oxide, 1 to 50 parts by weight of titanium dioxide, 1 to 50 parts by weight of a Thanaka tree extract, 1 to 50 parts by weight of oxybenzone, and 1 to 50 parts by weight of avobenzone.

A bird damage-preventing composition according to the present invention can be prepared in a liquid form and used for spraying or applying to crops, and can also be prepared in the form of a coating liquid and used for coating fruit protection bags.

When prepared in a liquid form, the bird damage-preventing composition may further contain stevia or sugar. At this time, the stevia or sugar may be used in the range of 1 to 30 parts by weight.

In addition, the bird damage-preventing composition may further contain talc (powder), which is an anti-sedimentation agent. The talc may be included in the range of 1 to 20 parts by weight.

In an embodiment, the bird damage-preventing composition may comprise 30 parts by weight of titanium dioxide, 30 parts by weight of zinc oxide, 30 parts by weight of Thanaka tree extract, 30 parts by weight of stevia, and 10 parts by weight of talc.

When the bird damage-preventing composition is treated onto crops, it becomes difficult for birds to identify the seed and fruit of crops, so that damage to crops caused by birds can be prevented. A method for treating the crops with the composition may include a method of appropriately diluting the bird damage-preventing composition and spraying or applying the composition. The bird damage-preventing composition is diluted with water by 1 to 500 times, preferably 200 to 500 times, to prepare an aqueous solution, which can then be sprayed or applied onto the crops.

Further, before the bird damage-preventing composition is treated onto the crops, stevia or sugar may be separately pretreated onto the crops. In this case, the bird damage-preventing composition may not contain stevia or sugar. If stevia or sugar is applied before applying the bird damage-preventing composition to the crop, the phenomenon of dazzling is first expressed evenly over the entire crop, causing ultraviolet rays to be scattered and reflected by sunlight on the crops, and further increasing the absorption of the bird damage-preventing composition onto the crop, so that it can be evenly covered and absorbed.

In addition, the bird damage-preventing composition can be used as a coating composition comprising a water-dispersible resin, a filler, and a thickener.

In this case, the water-dispersible resin may be any one of water-dispersible polyurethane, water-dispersible acrylic, and polyester, and it is preferable to use water-dispersible polyurethane.

In addition, carbon black can be used as the filler. Since the carbon black has a high degree of blackness and excellent colorability, electrical conductivity, weather resistance, and chemical resistance, it is suitable for use as a reinforcing agent and light-shielding material of the water-dispersible resin. The filler may be contained in the range of 5 to 20 parts by weight with respect to 100 parts by weight of the water-dispersible resin. If the content of the filler is too small, visible light may not be sufficiently blocked, which may deteriorate the function of the coating layer, and if the content of the filler is too large, curing after coating may not be performed well, which may deteriorate the durability of the coating layer.

In addition, the thickener may be one of xanthan gum, dammar gum, and cellulose powder, and may be contained in the range of 0.01 to 5 parts by weight with respect to 100 parts by weight of the water-dispersible resin. If the content of the thickener is too low, the viscosity may be low and thus the thickness of the coating layer may become thin, and if the content of the thickener is too high, the viscosity may be high, which may cause problems in curing and uniform coating.

When the bird damage-preventing composition is used as a coating liquid, the coating liquid can be applied to the surface of a fruit protection bag such as such as paper or vinyl, and then cured to form a coating layer.

For this purpose, it is preferable that the coating liquid is constituted to have a viscosity of 800 to 1,300 cps. If the viscosity is too low, there is a problem that the thickness of the coating layer becomes thin and the coating efficiency decreases, and if the viscosity is too high, curing is not performed well and the coating layer may become uneven.

The bird damage-preventing composition according to the present invention includes an ultraviolet blocking agent in this manner, and the composition is sprayed or applied onto crops, or coated on the surface of a substrate such as a fruit protection bag used for crops, thereby obtaining an effect of interrupting the vision of birds that recognize the seeds and fruits of crops, thereby reducing bird damage occurring at a crop cultivation site.

In order to confirm the effect of preventing bird damage when the bird damage-preventing composition of the present invention is treated onto crops, the bird damage-preventing composition is sprayed on blueberry and peach fruit trees, and then the presence or absence of bird damage was confirmed.

For blueberries, 6-year-old Blueberry Duke cuttings were used as test subjects, and 3 kg/ha of a 500-fold dilution of the bird damage-preventing composition was sprayed onto the fruit trees, the presence or absence of bird damage was observed for 25 days. Additionally, for peaches, 8-year-old grafted peaches from white-fleshed peaches were used as test subjects, and 3 kg/ha of a 500-fold dilution of the bird damage-preventing composition was sprayed on the fruit trees three times, after which the condition was observed three months after the date of spraying.

The results of investigating the overall croup yields of a treated group and a control group for blueberries showed that the croup yield of the group treated with the bird damage-preventing composition on the 15th day was 6.64 kg per tree, but the crop yield of the control group was only 2.14 kg, indicating that loss due to birds occurred in the fruit trees not treated with the bird damage-preventing composition.

In addition, in order to investigate the number of damaged individuals in the treated group and control group for peaches, a visual damage investigation was conducted three times using a randomized block design. The distance between the treated group (9 fruit trees) and the untreated group (9 fruit trees) was approximately 18.5 m. In addition, 100 fruits per tree were investigated to determine the average number of fruit trees damaged by birds. The results are shown in Table 1 below (the unit in Table 1 is number of damaged fruit trees/100 fruits).

**[Table 1]**

| | 1st spray | 2nd spray | 3rd spray | average |
|---|---|---|---|---|
| Treated group | 2.67 | 3,0 | 4.3 | 3.32 |
| Control group | 14.0 | 19.7 | 17.3 | 17.0 |

Looking at the results in Table 1, it was confirmed that in the case of the group treated with the bird damage-preventing composition, the average number of damaged fruits was 3.32, whereas in the case of the control group, the average number of damaged fruits was 17.0, so that spraying the bird damage-preventing composition onto the peach fruit trees is effective in preventing the approach of birds.

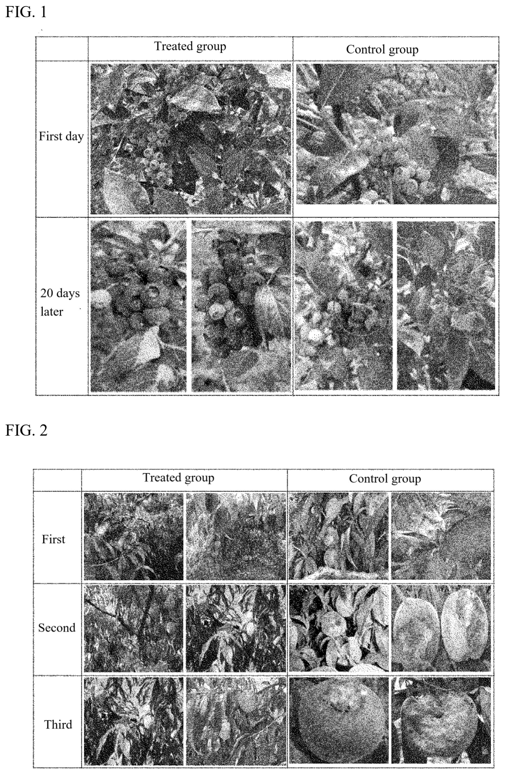

In addition, the results of observing a group treated with the bird damage-preventing composition onto blueberry fruit trees and a control group are as shown in FIG. 1, and the results of observing the group treated with the bird damage-preventing composition onto peach fruit trees and the control group are as shown in FIG. 2.

Looking at the results of observing the treated group and the control group, it was found that no bird damage was observed on the blueberry fruit trees sprayed with the bird damage-preventing composition even after 20 days, but bird damage was observed in the control group, indicating that birds are approaching the fruit trees.

Although the present invention has been illustrated and described above with reference to preferred embodiments, it will be understood by those skilled in the art that the invention is not limited to the above embodiments, and various modifications and alterations can be made to the embodiments without departing from the spirit of the present invention. It is intended that the present invention encompass such modifications and alterations as fall within the scope of the appended claims.

## Claims

1. A bird damage-preventing composition comprising an ultraviolet ray blocking agent comprising zinc oxide, titanium dioxide, and a Thanaka tree extract.

2. The bird damage-preventing composition according to claim 1, wherein the ultraviolet ray blocking agent further comprises oxybenzone (benzophenone-3; BP-3) and avobenzone.

3. The bird damage-preventing composition according to claim 1, wherein the bird damage-preventing composition comprises a water-dispersible resin, a filler and a thickener.

4. The bird damage-preventing composition according to claim 1, wherein the bird damage-preventing composition comprises a stevia or a sugar.

5. The bird damage-preventing composition according to claim 1, wherein the bird damage-preventing composition is diluted by mixing 2,000 to 5,000 parts by weight of water with respect to 100 parts by weight of the ultraviolet ray blocking agent.
